**Europäisches Patentamt**

**European Patent Office**

**Office européen des brevets**

(19)

(11) Numéro de publication: **0 069 020**
**B1**

(12) **FASCICULE DE BREVET EUROPEEN**

(45) Date de publication du fascicule du brevet:
**03.10.84**

(21) Numéro de dépôt: **82401203.3**

(22) Date de dépôt: **29.06.82**

(51) Int. Cl.³: **B 29 C 27/06,** F 16 L 47/02

(54) **Dispositif en matière plastique pour réaliser une perforation dans un élément sous-jacent en matière plastqiue, procédé de fabrication d'un tel dispositif et sa mise en oeuvre pour réaliser des dérivations de canalisations.**

(30) Priorité: 01.07.81 MC 1526
29.09.81 MC 1548

(43) Date de publication de la demande:
**05.01.83 Bulletin 83/1**

(45) Mention de la délivrance du brevet:
**03.10.84 Bulletin 84/40**

(84) Etats contractants désignés:
**CH DE GB IT LI**

(56) Documents cités:
**FR - A - 1 268 738**
**FR - A - 2 171 223**
**FR - A - 2 301 361**
**FR - A - 2 356 611**

(73) Titulaire: **INNOVATION TECHNIQUE, "Les Industries"
rue du Stade, Monaco (MC)**

(72) Inventeur: **Grandclement, Gérard, 89, Avenue
du 3 Septembre, F-06 Cap D'Ail (FR)**

(74) Mandataire: **Flechner, Willy et al, CABINET
FLECHNER 22, Avenue de Friedland, F-75008 Paris (FR)**

ACTORUM AG

## Description

La présente invention concerne un dispositif en matière plastique, de préférence en matière thermoplastique, pour réaliser une perforation dans un élément sous-jacent en une matière plastique similaire ou compatible avec la précédente, ainsi qu'un procédé pour la fabrication d'un tel dispositif et sa mise en œuvre pour réaliser des dérivations de canalisation.

Bien que le dispositif selon l'inventiion puisse être utilisé pour réaliser une perforation dans un quelconque élément sous-jacent, son application principale est celle de l'établissement, sur le chantier, d'une canalisation de dérivation sur une canalisation principale faite avec des tuyaux en matière plastique, notamment thermoplastique.

D'une manière générale, une telle dérivation est réalisée par perforation de la conduite principale, après mise en place de la dérivation, perforation rendue possible par chauffage de la conduite principale en matière thermoplastique à l'emplacement de la zone à perforer, ledit chauffage étant obtenu au moyen d'une résistance électrique de chauffage.

S'agissant du branchement d'une dérivation sur la conduite principale, la résistance électrique de chauffage est, selon une disposition connue et de pratique courante, incluse dans la selle de la dérivation, qui est placée sur la conduite principale, à l'emplacement où la dérivation est à réaliser, de manière à chauffer la partie de la selle et de la conduite principale dans la zone à percer, ce chauffage devant en même temps assurer la soudure étanche entre la selle de la dérivation et la conduite principale.

Pour obtenir un tel chauffage, un moyen connu (FR-A No 2171223) consiste à enrouler en spirale sur lui-même un fil électrique de chauffage, préalablement revêtu d'une gaine isolante, puis à noyer cette spirale dans la face généralement circulaire de la selle, qui est destinée à être appliquée contre la face extérieure de la conduite principale. Mais la fabrication de cette spirale de fil électrique isolé, d'une part, et son inclusion dans la selle, d'autre part, sont des opérations difficiles et coûteuses, et se prêtent mal à la réalisation en grande série, surtout si on veut obtenir une bonne qualité des pièces utilisées pour une dérivation.

Par ailleurs, l'une des extrémités de la spirale du fil, qui doit être branché à une source de tension électrique d'alimentation pour son chauffage, est située à l'intérieur de la plus petite spire, et son branchement avec la source de tension doit se faire par l'intérieur du branchement de dérivation de forme tubulaire, ce qui complique la mise en œuvre du fait que c'est là précisément que l'on doit intervenir pour percer la canalisation principale.

Suivant une autre proposition connue, on met en œuvre une nappe rectangulaire de fil gainé qui, fixée à l'intérieur de la dérivation, est emprisonnée entre cette dernière et la canalisation principale, sur le pourtour de cette dernière. Le fil gainé est chauffé par le passage d'un courant électrique, alors que la dérivation est appliquée contre la canalisation principale à l'aide d'une pince pour obtenir une force d'application suffisante pour un montage, la canalisation principale étant percée dès que sa paroi atteint un degré de viscosité suffisant.

Dans la mise en œuvre de cette technique, une puissance électrique notable est nécessaire pour réaliser le soudage, car le chauffage se fait sur tout le pourtour de la canalisation principale, alors que cette dernière risque par ailleurs d'éclater du fait du ramollissement nécessaire de la matière plastique avec laquelle elle est faite. Enfin, pendant le percement de la canalisation principale, on est obligé de couper un certain nombre de fils de la nappe rectangulaire, ce qui complique l'opération de percement et peut éventuellement conduire à des microfuites le long de la surface de séparation du fil chauffant avec sa gaine.

Pour remédier aux inconvénients susmentionnés, la présente invention a pour objet un dispositif en matière plastique, notamment en matière thermoplastique, pour réaliser une perforation dans un élément sous-jacent fait de la même matière ou avec une matière plastique compatible avec la précédente, dispositif qui est essentiellement caractérisé par le fait qu'il est constitué par une plaquette d'épaisseur relativement faible, dans une face de laquelle est ménagée une gorge en forme de spirale au centre de laquelle la plaquette est munie d'une ouverture, ladite gorge en forme d'une spirale étant destinée à recevoir un fil de chauffage électrique dont une extrémité est destinée à être accrochée à un premier appendice porté par la plaquette, du côté de la face dans laquelle est ménagée ladite gorge, et dont l'autre est destinée à être accrochée à un second appendice similaire au premier et situé à une certaine distance de ce dernier.

Avantageusement, une première forme de réalisation d'un tel dispositif est caractérisée par le fait que la plaquette est sensiblement circulaire et possède deux oreilles portant les appendices, la spire extérieure de la gorge en forme de spirale débouchant à la périphérie de la plaquette au niveau dudit premier appendice, alors que, au niveau de l'oreille portant le second appendice, la plaquette est pourvue d'une languette susceptible d'être rabattue sur la face rainurée de la plaquette, de manière qu'au moins l'une de ses parties assume une position radiale et serve de support isolant pour l'extrémité du fil sortant de la spire intérieure de la gorge et destiné à s'accrocher sur le second appendice.

Suivant une autre forme de réalisation, le dispositif est caractérisé par le fait que, au niveau de l'entrée périphérique de la gorge, la plaquette est pourvue d'au moins un ergot de guidage du fil qui s'accroche sur le premier appendice, et/ou des ergots sont prévus sur la face supérieure de la languette rabattue, pour guider le fil qui s'accroche sur le second appendice.

D'autres formes de réalisation sont caractérisées par le fait que:

a) la languette est pourvue près de la périphérie

de la plaquette d'une partie amincie faisant charnière;

b) entre les deux appendices, la périphérie de la plaquette est pourvue d'au moins un téton de positionnement;

c) chaque appendice présente une base conique liée à la face rainurée de la plaquette et se termine par une partie cylindrique;

d) les côtés latéraux des spires de la gorge en forme de spirales sont inclinés en direction du centre de la plaquette, et

e) l'entrée des spires est étranglée par rapport au diamètre du fil de chauffage, au moins sur certaines longueurs de celles-ci.

L'invention porte également sur un procédé pour la mise en place du fil de chauffage dans la gorge en spirale du dispositif tel que défini ci-dessus; ce procédé est caractérisé par le fait que le fil de chauffage provenant d'une bobine débitrice est accroché audit premier appendice et est placé autour de l'ergot voisin, qu'un croisillon à plusieurs branches qui s'étendent entre les deux appendices est placé en position centrale sur la plaquette, que l'on fait tourner la plaquette sous le croisillon jusqu'à la garniture complète de la spire, que l'on rabat la languette sur la plaquette et que l'on fixe, après séparation du fil provenant de la bobine, l'extrémité de ce dernier sur le second appendice, en le faisant passer sur ou entre les ergots portés par ladite languette.

Avantageusement, on déforme, après exécution des différentes phases opératoires de ce procédé, les ouvertures de la gorge par application d'un outil chaud, ce qui emprisonne le fil chauffant dans la gorge.

Enfin, la présente invention concerne également la mise en œuvre d'un dispositif tel que défini ci-dessus, pour assujettir la selle d'une dérivation à une canalisation ou conduite principale en matière plastique, mise en œuvre qui est caractérisée par le fait que ledit dispositif est incorporé, sous forme galbée ou cintrée, à la face de la selle destinée à venir porter contre la canalisation ou conduite principale, de préférence pendant le moulage de la selle, et qu'il est fermement maintenu pendant le chauffage du fil contre ladite canalisation par des étriers accrochés à des pattes de la selle ou par engagement de ce dernier dans un demi-collier comportant des rainures à rampes inclinées de serrage ou à serrage par déformation élastique du demi-collier et/ou de la selle.

A titre d'exemple, on a décrit ci-dessous et représenté au dessin annexé une forme de réalisation, avec des variantes, de l'objet de l'invention.

La fig. 1 est une coupe diamétrale du dispositif de l'invention.

La fig. 2 est une vue en plan du dispositif de la fig. 1, sur sa face comportant la gorge en forme de spirale.

La fig. 3 est une vue en plan du dispositif selon l'invention montrant le mode de mise en place du fil chauffant dans la gorge en forme de spirale.

La fig. 4 est une vue de détail montrant la réalisation d'une borne de raccordement du dispositif selon l'invention.

La fig. 5 est une vue en plan du dispositif selon l'invention avec mise en place d'outils chauds pour déformer les lèvres de la gorge en forme de spirale, en vue d'emprisonner le fil chauffant.

La fig. 6 est une coupe diamétrale partielle du dispositif selon l'invention, montrant une forme particulière de la section radiale de la gorge.

La fig. 7 est une coupe schématique d'une dérivation pour une canalisation principale, comportant le dispositif selon l'invention.

La fig. 8 est une coupe de la fig. 7 selon la ligne VIII-VIII.

La fig. 9 montre schématiquement un moule à injection pour incorporer le dispositif selon l'invention dans une selle.

La fig. 10 est une vue de détail montrant une sortie du fil de chauffage.

La fig. 11 est une vue perspective éclatée de la selle et du demi-collier de serrage.

La fig. 12 est une coupe transversale médiane de la fig. 11, à l'état monté, avec le dispositif selon l'invention qui n'a pas été représenté dans la fig. 11 pour ne pas l'encombrer.

La fig. 13 est une vue schématique en coupe d'un collier de serrage.

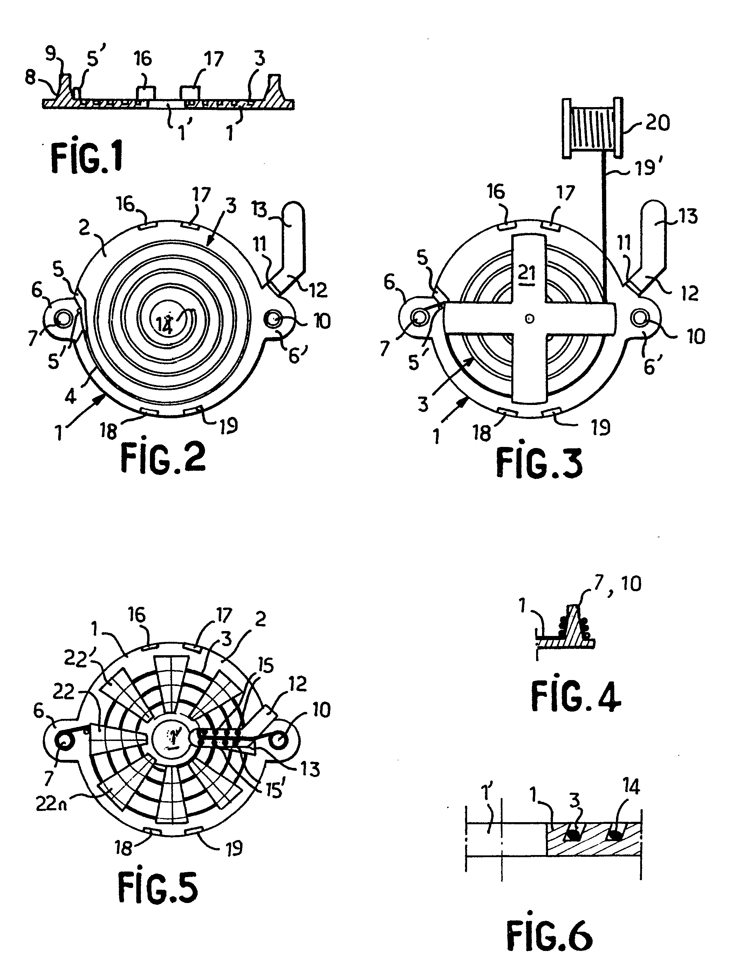

Ainsi que cela est visible dans les fig. 1 et 2, le dispositif selon l'invention est constitué par une mince plaquette sensiblement ronde de matière plastique moulée 1. Dans la face supérieure 2 de cette plaquette 1 est ménagée une gorge désignée par la référence générale 3, obtenue directement lors du moulage de la plaquette 1, et capable d'être dégagée du moule par simple rotation de la plaquette dans son plan, ce qui est rendu possible en faisant déboucher la spire extérieure 4 à la périphérie de la plaquette, de préférence par une gorge élargie 5 à l'embouchure de laquelle est prévu un ergot 5'. Au niveau de la gorge élargie, la plaquette 1 se prolonge par une première oreille 6, avec laquelle est venu d'une pièce au moulage un premier appendice 7 ayant une base sensiblement tronconique 8 et un sommet cylindrique 9. Diamétralement opposée à l'oreille 6, la plaque 1 est pourvue, sur une seconde oreille 6', d'un second appendice 10 identique au premier appendice 7. Au second appendice 10 se rattache, par une partie amincie 11 formant charnière, une languette coudée 12, 13 dont la partie 13 assume une position radiale sensiblement alignée avec les appendices 7 et 10 et avec l'extrémité 14 de la spire intérieure de la gorge 3. Cette languette est pourvue sur la face postérieure de sa partie 13, non visible dans la fig. 2, mais visible dans la fig. 5, de deux rangées d'ergots 15, 15'. Enfin, la plaquette 1 est pourvue de quatre tétons de positionnement périphériques 16, 17, 18, 19 dont l'objet sera explicité plus loin, et il convient de noter que la profondeur de la gorge 3 est telle que le fil de chauffage nu qui doit y être logé se situe le plus près possible de la face de la plaquette opposée à celle dans laquelle est ménagée ladite gorge.

Pour mettre en place le fil de chauffage dénudé dans la gorge 3, on procède comme suit. Le fil de chauffage 19' (fig. 3) est prélevé sur la bobine débitrice 20. Son extrémité libre est d'abord enroulée, comme indiqué en fig. 4, sur l'appendice 5, puis le fil est passé autour de l'ergot 5', ce qui positionne le fil à l'entrée de la gorge 3 en forme de spirale. Ensuite, on place sur la plaquette 1, en position centrale, un croisillon 21 à quatre branches de manière que celui-ci porte contre la plaquette; on fait tourner cette dernière dans le sens des aiguilles d'une montre, ce qui conduit le fil à se dérouler de la bobine 20 et à garnir progressivement les spires ou sillons de la spirale. Lorsque le fil aura garni la gorge 3 jusqu'à l'extrémité 14 de la spire intérieure de la spirale, on enlève le croisillon 21 en ayant soin d'éviter que le fil ne quitte la spirale, et l'on rabat sur la plaquette 1 la languette coudée 12, 13 autour de la partie amincie 11 faisant charnière, de manière que la partie 13 vienne se situer, comme visible en fig. 5, en position radiale, sensiblement dans l'alignement des appendices 7 et 10. Puis on passe le fil 19' entre les deux rangées d'ergots 15 et 15' et on enroule son extrémité sur l'appendice 10 de la manière représentée à la fig. 4.

Pour empêcher la sortie du fil de la gorge, après enlèvement du croisillon 21, on peut appliquer sur la face de la plaquette 1, qui est munie de la gorge contenant le fil de chauffage, un outil chaud à plusieurs empreintes trapézoïdales 22, 22', 22'',...., $22^n$, se situant entre les branches du croisillon 21, outil qui écrasera les bords ou lèvres de la gorge; mais on peut également donner à la gorge, comme représenté dans la fig. 6, des parois latérales inclinées vers le bas et vers le centre de la plaquette, ce qui empêche automatiquement la sortie du fil qui est disposé dans la gorge avec tension, ou l'on peut encore adopter pour les lèvres de la gorge un écartement inférieur au diamètre du fil, en sorte que celui-ci est en quelque sorte encliqueté dans la gorge.

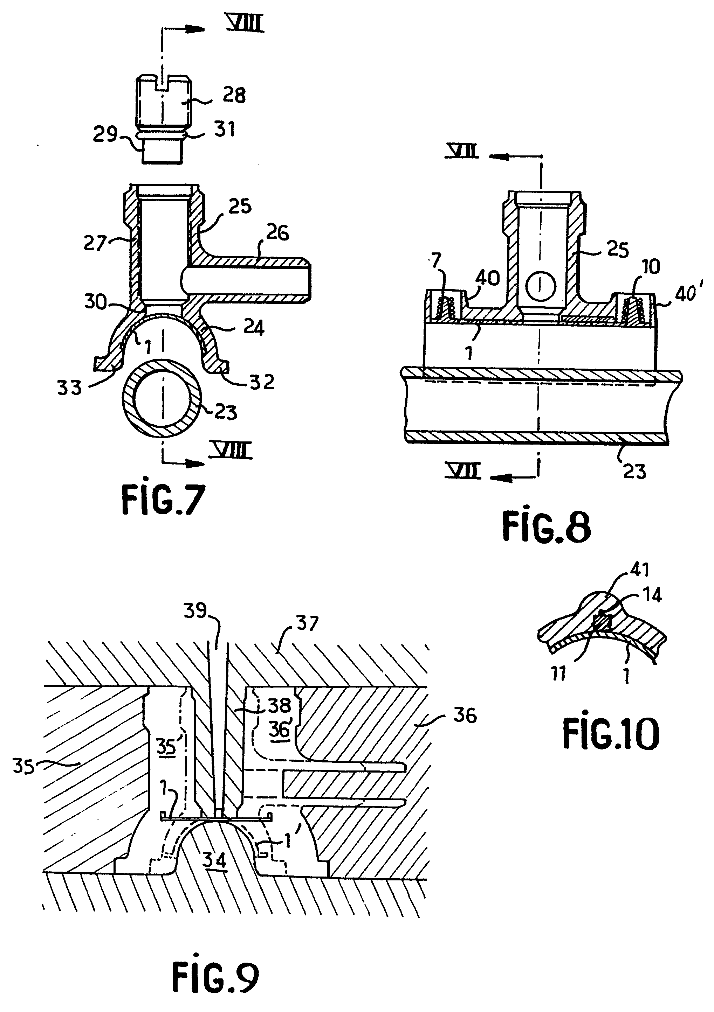

La fig. 7 montre la mise en œuvre du dispositif selon l'invention pour établir, sur le chantier, une dérivation sur une canalisation principale, représentée par la conduite 23, sur laquelle il convient d'assujettir la dérivation comportant une selle 24 arrondie à la courbure extérieure de la canalisation et surmontée d'une cheminée tubulaire 25 dans laquelle débouche latéralement la conduite de dérivation 26.

Dans le taraudage 27 de la cheminée est susceptible d'être vissé un perforateur 28 dont la queue inférieure 29 est susceptible de passer par le trou inférieur 30 de la cheminée pour percer la paroi de la canalisation 23 qui aura préalablement été amenée à la fusion, comme il sera décrit plus loin, après quoi, et après solidification de la paroi de la canalisation, le perforateur 28, pourvu de sa garniture d'étanchéité 31, est remonté au-dessus de la conduite de dérivation 26 et est enlevé.

Pour chauffer et faire fondre la matière plastique avec laquelle est faite la canalisation 23, au niveau de la dérivation, on utilise le dispositif de l'invention tel qu'il a été décrit à l'aide des fig. 1 à 6. La plaquette 1, garnie du fil de chauffage, est placée sous la selle 24, et celle-ci est maintenue appliquée contre la canalisation à l'aide d'un collier de serrage attaquant la selle au niveau de ses deux pattes 32 et 33. On relie alors les deux bornes 7 et 10 de la plaquette 1 jusqu'à fusion ou ramollissement de la partie correspondante de la canalisation 23; après solidification de la canalisation 23 au niveau de la plaquette 1, on enfonce le perforateur 28 dans la cheminée pour que sa queue 29 passe par la paroi de la canalisation, et on dégage le perforateur 28 du conduit de dérivation 26. Le percement est ainsi réalisé et l'étanchéité est assurée par la fusion au moins superficielle de la plaquette 1 avec la paroi de la canalisation, alors que sur la cheminée de la dérivation on visse un capuchon après mise en place d'un joint torique.

Mais, avantageusement, la plaquette chauffante 1, telle que décrite à propos des fig. 1 à 6, est incorporée à la selle de dérivation, pendant le moulage de cette dernière, de la façon représentée à la fig. 9.

La plaquette 1 est placée dans le moule ouvert, sur un bossage fixe 34 cintré au profil de la selle à obtenir, les tiroirs 35 et 36 étant dans leur position rétractée d'ouverture du moule. Puis la plaquette 1 est bloquée par son centre, par descente de la partie haute 37 du moule, qui porte un appendice 38 constituant la réserve de la cavité de la cheminée 25 et pourvue du canal d'injection 39. Les tiroirs latéraux 35 et 36 sont ensuite fermés et prennent les positions 35' et 36', cintrant la plaquette comme indiqué en 1'. Dans le moule ainsi fermé, on injecte la matière thermoplastique pour réaliser la dérivation dans laquelle se trouve noyée la plaquette 1'. De préférence, les bornes 7 et 10 de la plaquette 1 seront en même temps entourées par de petites cheminées de protection 40 et 40' venues de moulage avec la dérivation, et on réalisera, dans cette même opération de moulage, une surépaisseur 41 (fig. 10) sur la partie 13 de la patte rabattue sur la plaquette 1, comme représenté en fig. 5, afin de protéger le fil qui passe entre les ergots 15 et 15' avant d'être enroulé sur l'appendice 10.

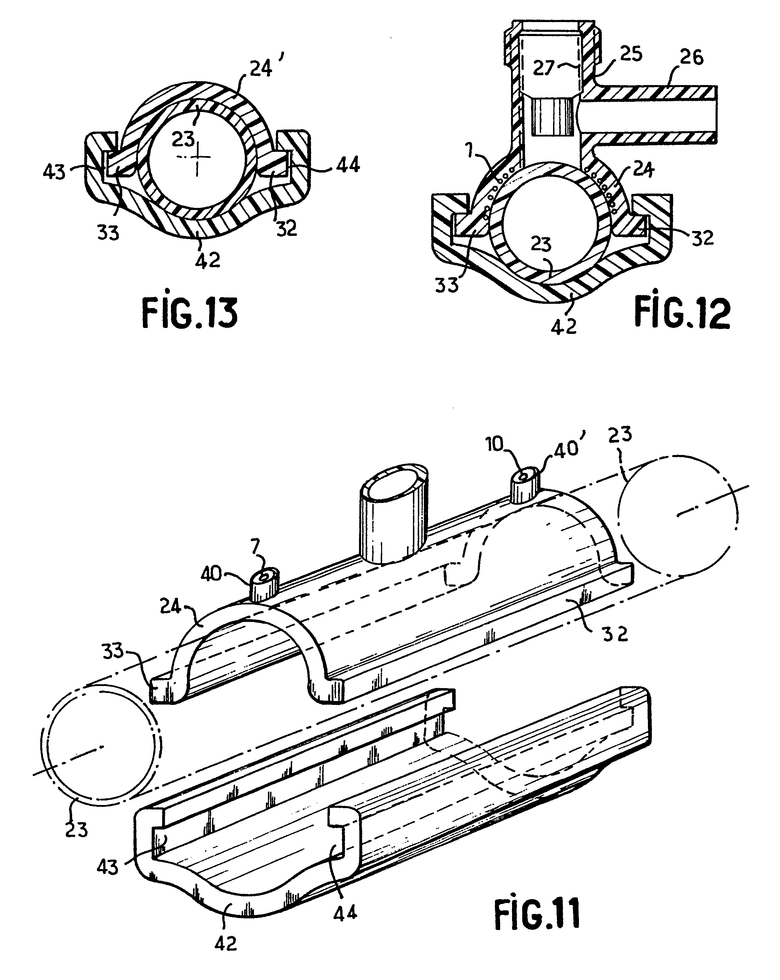

Les fig. 11 et 12 montrent une variante de la réalisation d'une dérivation sur une canalisation principale, avec mise en œuvre d'une plaquette selon l'invention qui n'est pas représentée en fig. 11 pour ne pas surcharger le dessin, mais qui est visible dans la fig. 12 qui est une coupe transversale médiane de la dérivation de la fig. 11, les mêmes éléments que ceux des autres figures y étant désignés par les mêmes références.

Pour serrer la selle 24 dans laquelle est noyée la plaquette 1 selon l'invention, garnie du fil de chauffage dénudé, dont les bornes 7 et 10 sont protégées par les cheminées 40 et 40', on utilise un demi-collier en matière plastique 42 qui est formé d'une portion médiane cylindrique aux extrémités de laquelle sont réalisées des gorges 43 et 44 en U, dont la hauteur est décroissante d'une extrémité à l'autre et dans lesquelles s'engagent les pattes 32 et 33 de la selle, ce qui provoque le serrage de la selle sur la canalisation 23 et l'application ferme de la plaquette 1 sur la paroi extérieure de cette dernière pour une bonne soudure.

Suivant une variante, les gorges en U ont une

Drahts, das Ende desselben an dem zweiten Fortsatz (10) befestigt wird, wobei man den Draht über die oder zwischen den von der besagten Zunge getragenen Vorsprüngen (15, 15') verlaufen lässt.

14. Verfahren nach Anspruch 13, dadurch gekennzeichnet, dass nach Durchführen der verschiedenen Arbeitsgänge die Öffnungen der Nut (3) durch Anwendung eines erhitzten Werkzeuges (22,..., 22ⁿ) verformt werden.

15. Verwendung einer Vorrichtung gemäss einem der Ansprüche 1 bis 12, die vorzugsweise nach einem Verfahren gemäss einem der beiden Ansprüche 13 oder 14 hergestellt ist, um den Sattel (24) eines Rohrabzweigs an einer Rohrleitung oder einem Hauptrohr (23) aus thermoplastischem Kunststoff zu befestigen, dadurch gekennzeichnet, dass die Vorrichtung (1) in gerundeter oder gewölbter Form in die Fläche des Sattels, die dazu bestimmt ist, an die Rohrleitung oder das Hauptrohr (23) angelegt zu werden, vorzugsweise während des Vorgangs des Giessens des Sattels eingefügt und während des Erhitzens des Drahts in fester Anlage an der besagten Rohrleitung vermittelt an Befestigungslaschen (32, 33) des Sattels angreifender Halter oder durch gegenseitigen Eingriff zwischen den Laschen (32, 33) und einer Halbschelle gehalten wird, die Nuten in Form geneigter Halterampen (33, 44) aufweist oder mit der der Sattel durch elastische Verformung der Halbschelle und/oder des Sattels verklammert ist.

## Revendications

1. Dispositif en matière plastique, notamment en matière thermoplastique, pour réaliser une perforation dans un élément sous-jacent fait de la même matière plastique ou d'une matière plastique compatible avec la précédente, caractérisé par le fait qu'il est constitué par une plaquette (1) d'épaisseur relativement faible, dans une face (2) de laquelle est ménagée une gorge (3) en forme de spirale au centre de laquelle la plaquette est munie d'une ouverture (1'), ladite gorge en forme de spirale étant destinée à recevoir un fil de chauffage électrique (19') dont une extrémité est destinée à être accrochée à un premier appendice (7) porté par la plaquette, du côté de la face dans laquelle est ménagée ladite gorge, et dont l'autre est destinée à être accrochée à un second appendice (10), similaire au premier, situé à une certaine distance de ce dernier.

2. Dispositif selon la revendication 1, caractérisé par le fait que l'extrémité du fil de chauffage électrique (19'), destinée à être accrochée audit second appendice (10), passe sur la face de la plaquette (1) dans laquelle est ménagée la gorge en spirale (3).

3. Dispositif selon l'une et/ou l'autre des revendications 1 et 2, caractérisé par le fait que l'extrémité du fil de chauffage électrique (19'), destinée à être raccordée audit second appendice (10), rejoint ce dernier en passant entre deux rangées d'ergots (15, 15').

4. Dispositif selon l'une des revendications précédentes, caractérisé par le fait que l'extrémité du fil de chauffage électrique (19'), destinée à être accrochée audit second appendice (10), rejoint ce dernier en étant isolé de la plaquette (1) par une languette (12, 13).

5. Dispositif selon les revendications 3 et 4, caractérisé par le fait que les ergots (15, 15') sont portés par une languette (12, 13).

6. Dispositif selon l'une des revendications 4 ou 5, caractérisé par le fait que la plaquette (1) est sensiblement circulaire et possède deux oreilles (6, 6') portant les appendices (7, 10), la spire extérieure (4) de la gorge (3) en forme de spirale débouchant à la périphérie de la plaquette au niveau dudit premier appendice (7), alors que, au niveau de l'oreille portant le second appendice (10), la plaquette est pourvue de la languette (12, 13) susceptible d'être rabattue sur la face rainurée de la plaquette de manière qu'au moins l'une (13) de ses parties assume une position radiale et serve de support isolant pour l'extrémité du fil sortant de la spire intérieure (14) de la gorge et destiné à s'accrocher sur le second appendice (10).

7. Dispositif selon l'une des revendications 4 à 6, caractérisé par le fait que, au niveau de l'entrée périphérique de la gorge (3), la plaquette (1) est pourvue d'au moins un ergot de guidage (5') du fil qui s'accroche sur le premier appendice (7), et/ou des ergots (15, 15') sont prévus sur la face supérieure de la languettte rabattue (12, 13), pour guider le fil qui s'accroche sur le second appendice (10).

8. Dispositif selon l'une des revendications 5 ou 6, caractérisé par le fait que la languette (12, 13) est pourvue, près de la périphérie de la plaquette (1), d'une partie amincie (11) faisant charnière.

9. Dispositif selon l'une des revendications 1 à 8, caractérisé par le fait que, entre les deux appendices (7, 10), la périphérie de la plaquette (1) est pourvue d'au moins un téton de positionnement (16).

10. Dispositif selon l'une des revendications 1 à 9, caractérisé par le fait que chaque appendice (7, 10) présente une base conique (8) liée à la face rainurée (2) de la plaquette (1) et se termine par une partie cylindrique (9).

11. Dispositif selon l'une des revendications 1 à 10, caractérisé par le fait que les côtés latéraux des spires de la gorge (3) en forme de spirale sont inclinés en direction du centre de la plaquette (1').

12. Dispositif selon l'une des revendications 1 à 10, caractérisé par le fait que l'entrée des spires est étranglée par rapport au diamètre du fil de chauffage, au moins sur certaines longueurs de celles-ci.

13. Procédé pour la mise en place du fil de chauffage dans la gorge (3) en spirale du dispositif selon l'une des revendications 7 à 12, caractérisé par le fait que le fil de chauffage (19'), provenant d'une bobine débitrice (20), est accroché audit premier appendice (7) et est placé autour de l'ergot (5') voisin, qu'un croisillon (21) à plusieurs branches qui s'étendent entre les deux appendices est placé en position centrale sur la plaquette, que

**Revendications**

1. Dispositif en matière plastique, notamment en matière thermoplastique, pour réaliser une perforation dans un élément sous-jacent fait de la même matière plastique ou d'une matière plastique compatible avec la précédente, caractérisé par le fait qu'il est constitué par une plaquette (1) d'épaisseur relativement faible, dans une face (2) de laquelle est ménagée une gorge (3) en forme de spirale au centre de laquelle la plaquette est munie d'une ouverture (1'), ladite gorge en forme de spirale étant destinée à recevoir un fil de chauffage électrique (19') dont une extrémité est destinée à être accrochée à un premier appendice (7) porté par la plaquette, du côté de la face dans laquelle est ménagée ladite gorge, et dont l'autre est destinée à être accrochée à un second appendice (10), similaire au premier, situé à une certaine distance de ce dernier.

2. Dispositif selon la revendication 1, caractérisé par le fait que l'extrémité du fil de chauffage électrique (19'), destinée à être accrochée audit second appendice (10), passe sur la face de la plaquette (1) dans laquelle est ménagée la gorge en spirale (3).

3. Dispositif selon l'une et/ou l'autre des revendications 1 et 2, caractérisé par le fait que l'extrémité du fil de chauffage électrique (19'), destinée à être raccordée audit second appendice (10), rejoint ce dernier en passant entre deux rangées d'ergots (15, 15').

4. Dispositif selon l'une des revendications précédentes, caractérisé par le fait que l'extrémité du fil de chauffage électrique (19'), destinée à être accrochée audit second appendice (10), rejoint ce dernier en étant isolé de la plaquette (1) par une languette (12, 13).

5. Dispositif selon les revendications 3 et 4, caractérisé par le fait que les ergots (15, 15') sont portés par une languette (12, 13).

6. Dispositif selon l'une des revendications 4 ou 5, caractérisé par le fait que la plaquette (1) est sensiblement circulaire et possède deux oreilles (6, 6') portant les appendices (7, 10), la spire extérieure (4) de la gorge (3) en forme de spirale débouchant à la périphérie de la plaquette au niveau dudit premier appendice (7), alors que, au niveau de l'oreille portant le second appendice (10), la plaquette est pourvue de la languette (12, 13) susceptible d'être rabattue sur la face rainurée de la plaquette de manière qu'au moins l'une (13) de ses parties assume une position radiale et serve de support isolant pour l'extrémité du fil sortant de la spire intérieure (14) de la gorge et destiné à s'accrocher sur le second appendice (10).

7. Dispositif selon l'une des revendications 4 à 6, caractérisé par le fait que, au niveau de l'entrée périphérique de la gorge (3), la plaquette (1) est pourvue d'au moins un ergot de guidage (5') du fil qui s'accroche sur le premier appendice (7), et/ou des ergots (15, 15') sont prévus sur la face supérieure de la languettte rabattue (12, 13), pour guider le fil qui s'accroche sur le second appendice (10).

8. Dispositif selon l'une des revendications 5 ou 6, caractérisé par le fait que la languette (12, 13) est pourvue, près de la périphérie de la plaquette (1), d'une partie amincie (11) faisant charnière.

9. Dispositif selon l'une des revendications 1 à 8, caractérisé par le fait que, entre les deux appendices (7, 10), la périphérie de la plaquette (1) est pourvue d'au moins un téton de positionnement (16).

10. Dispositif selon l'une des revendications 1 à 9, caractérisé par le fait que chaque appendice (7, 10) présente une base conique (8) liée à la face rainurée (2) de la plaquette (1) et se termine par une partie cylindrique (9).

11. Dispositif selon l'une des revendications 1 à 10, caractérisé par le fait que les côtés latéraux des spires de la gorge (3) en forme de spirale sont inclinés en direction du centre de la plaquette (1').

12. Dispositif selon l'une des revendications 1 à 10, caractérisé par le fait que l'entrée des spires est étranglée par rapport au diamètre du fil de chauffage, au moins sur certaines longueurs de celles-ci.

13. Procédé pour la mise en place du fil de chauffage dans la gorge (3) en spirale du dispositif selon l'une des revendications 7 à 12, caractérisé par le fait que le fil de chauffage (19'), provenant d'une bobine débitrice (20), est accroché audit premier appendice (7) et est placé autour de l'ergot (5') voisin, qu'un croisillon (21) à plusieurs branches qui s'étendent entre les deux appendices est placé en position centrale sur la plaquette, que l'on fait tourner la plaquette (1) sous le croisillon (21) jusqu'à la garniture complète de la spirale, que l'on rabat la languette (12, 13) sur la plaquette (1) et que l'on fixe, après séparation du fil provenant de la bobine, l'extrémité de ce dernier sur le second appendice (10), en le faisant passer sur ou entre les ergots (15, 15') portés par ladite languette.

14. Procédé selon la revendication 13, caractérisé par le fait qu'après exécution des diverses opérations, on déforme les ouvertures de la gorge (3) par application d'un outil chaud (22,..., 22$^n$). ·

15. Mise en œuvre d'un dispositif selon l'une des revendications 1 à 12, de préférence réalisé suivant le procédé d'une des revendications 9 ou 10, pour assujettir la selle (24) d'une dérivation à une canalisation ou conduite principale en matière thermoplastique (23), caractérisée par le fait que le dispositif (1) est incorporé, sous forme galbée ou cintrée, à la face de la selle destinée à venir porter contre la canalisation (23) ou le conduit principal, de préférence pendant le moulage de la selle, et qu'il est fermement maintenu pendant le chauffage du fil contre ladite canalisation par des étriers accrochés à des pattes (32, 33) de la selle, ou par engagement de ces dernières dans un demi-collier comportant des rainures à rampes inclinées de serrage (43, 44) ou à serrage par déformation élastique du demi-collier et/ou de la selle.

## Claims

1. Device made of plastics material, more particularly thermoplastics material, for making a hole in an underlying element made of the same plastics material or of plastics material compatible with the above material, characterised by the fact that it comprises a relatively thin small plate (1), arranged in one face (2) in which is a groove (3) in the form of a spiral, in the centre of which the small plate is provided with an opening (1'), the said groove in the form of a spiral being intended to receive an electric heating wire (19'), one end of which is intended to be hooked onto a first appendage (7) carried by the small plate, on the side of the face in which the said groove is provided, and the other end of which is intended to be hooked onto a second appendage (10), similar to the first one, located at a specific distance from the first one.

2. Device according to Claim 1, characterised by the fact that the end of the electric heating wire (19'), intended to be hooked onto the said second appendage (10), passes over the face of the small plate (1) in which is provided the groove (3) in the form of a spiral.

3. Device according to Claim 1 and/or Claim 2, characterised by the fact that the end of the electric heating wire (19'), intended to be connected to the said second appendage (10), joins the latter by passing between two rows of lugs (15, 15').

4. Device according to one of the preceding claims, characterised by the fact that the end of the electric heating wire (19'), intended to be hooked onto the said second appendage (10), joins the latter by being isolated from the small plate (1) by a tongue (12, 13).

5. Device according to Claims 3 and 4, characterised by the fact that the lugs (15, 15') are carried by a tongue (12, 13).

6. Device according to one of Claims 4 or 5, characterised by the fact that the small plate (1) is substantially circular and has two brackets (6, 6') carrying the appendages (7, 10), the outer turn (4) of the groove (3) in the form of a spiral emerging at the periphery of the small plate level with the said first appendage (7), while, at the level of the bracket carrying the second appendage (10), the small plate is provided with the tongue (12, 13) capable of being lowered onto the grooved face of the small plate so that at least one (13) of its parts assumes a radial position and acts as an isolating support for the end of the wire issuing from the inner turn (14) of the groove and which is to be hooked onto the second appendage (10).

7. Device according to one of Claims 4 to 6, characterised by the fact that, at the level of the peripheral inlet of the groove (3), the small plate (1) is provided with at least one guiding lug (5') for the wire which hooks onto the second appendage (7), and/or lugs (15, 15') are provided on the upper face of the lowered tongue (12, 13) to guide the wire which hooks onto the second appendage (10).

8. Device according to one of Claims 5 or 6, characterised by the fact that, in the vicinity of the periphery of the small plate (1), the tongue (12, 13) is provided with a thinner portion (11) forming a hinge.

9. Device according to one of Claims 1 to 8, characterised by the fact that, between the two appendages (7, 10), the periphery of the small plate (1) is provided with at least one positioning member (16).

10. Device according to one of Claims 1 to 9, characterised by the fact that each appendage (7, 10) has a conical base (8) connected to the grooved face (2) of the small plate (1) and ends in a cylindrical portion (9).

11. Device according to one of Claims 1 to 10, characterised by the fact that the sides of the turns of the groove (3) in the form of a spiral are inclined towards the centre of the small plate (1').

12. Device according to one of Claims 1 to 10, characterised by the fact that the inlet of the turns is narrowed in relation to the diameter of the heating wire, at least over some of their length.

13. Method of positioning the heating wire in the spiral groove (3) of the device according to one of Claims 7 to 12, characterised by the fact that the heating wire (19') coming from a feeding spool (20) is hooked onto the said first appendage (7) and is placed around the adjacent lug (5'), that a cross-piece (21) having several arms extending between the two appendages is placed in a central position on the small plate, that the small plate (1) is turned under the cross-piece (21) until the spiral is completely filled, that the tongue (12, 13) is lowered onto the small plate (1) and, after the wire from the spool is detached, its end is fixed to the

hauteur constante, mais les pattes 32 et 33 sont inclinées sur l'axe de la canalisation, encore qu'une disposition inverse donne le même résultat.

Enfin, suivant une autre variante, le serrage est simplement obtenu en adoptant, pour un diamètre de canalisation donné, des dimensions telles des rayons de coubure du demi-collier que la déformation élastique de la matière exerce sur les pattes 32 et 33 des efforts ayant tendance à les rapprocher, ce qui est également le cas de la réalisation selon la fig. 13 dans laquelle le demi-collier 42 est associé à une selle simple 24' sans dérivation.

Il est bien entendu que les exemples décrits ci-dessus ne constituent que des formes de réalisation préférées de l'objet de l'invention, et que celle-ci englobe des variantes.

## Patentansprüche

1. Vorrichtung aus Kunststoff, insbesondere aus thermoplastischem Kunststoff, zum Durchbohren eines darunterliegenden Teils, der aus dem gleichen Kunststoff oder einem damit kompatiblen Kunststoff gefertigt ist, dadurch gekennzeichnet, dass sie aus einem Plättchen (1) verhältnismässig geringer Dicke gebildet ist, in deren einer Seite (2) eine Nut (3) in Form einer Spirale ausgebildet ist, in deren Zentrum das Plättchen mit einer Öffnung (1') versehen ist, dass die besagte Nut in Form einer Spirale zur Aufnahme eines elektrischen Heizdrahts (19') vorgesehen ist, dessen eines Ende dazu bestimmt ist, an einem ersten Fortsatz (7) befestigt zu werden, der vom Plättchen auf der Seite getragen wird, in der die besagte Nut ausgebildet ist, und dessen anderes Ende dazu bestimmt ist, an einem zweiten Fortsatz (10) befestigt zu werden, der dem ersten Fortsatz ähnlich und in einem gewissen Abstand von diesem angeordnet ist.

2. Vorrichtung nach Anspruch 1, dadurch gekennzeichnet, dass das Ende des elektrischen Heizdrahts (19'), das für die Befestigung am zweiten Fortsatz (10) bestimmt ist, sich über diejenige Seite des Plättchens (1) erstreckt, in der die spiralförmige Nut (3) ausgebildet ist.

3. Vorrichtung nach einem der beiden Ansprüche 1 oder 2, dadurch gekennzeichnet, dass das Ende des elektrischen Heizdrahts (19'), das zur Befestigung an dem besagten zweiten Fortsatz (10) bestimmt ist, zu diesem gelangt, indem es zwischen zwei Reihen von Vorsprüngen (15, 15') verläuft.

4. Vorrichtung nach einem der vorausgehenden Ansprüche, dadurch gekennzeichnet, dass das Ende des elektrischen Heizdrahts (19'), das zur Befestigung am besagten zweiten Fortsatz (10) bestimmt ist, zu diesem gelangt, indem es durch eine Zunge (12, 13) von dem Plättchen (1) isoliert ist.

5. Vorrichtung nach den Ansprüchen 3 und 4, dadurch gekennzeichnet, dass die Vorsprünge (15, 15') von einer Zunge (12, 13) getragen sind.

6. Vorrichtung nach einem der beiden Ansprüche 4 oder 5, dadurch gekennzeichnet, dass das Plättchen (1) im wesentlichen kreisrund ist und zwei Ansätze (6, 6') besitzt, die die Fortsätze (7, 10) tragen, dass die äussere Windung (4) der spiralförmigen Nut (3) am Umfang des Plättchens auf Höhe des besagten ersten Fortsatzes (7) mündet, während auf Höhe des den zweiten Fortsatz (10) tragenden Ansatzes das Plättchen mit der Zunge (12, 13) versehen ist, welche über die mit der Nut versehene Seite des Plättchens in der Weise umlegbar ist, dass zumindest ein (13) ihrer Zungenteile eine radiale Stellung einnimmt und als isolierender Träger für das Ende des Drahtes dient, das die innere Windung (14) der Nut verlässt und für die Befestigung am zweiten Fortsatz (10) bestimmt ist.

7. Vorrichtung nach einem der Ansprüche 4 bis 6, dadurch gekennzeichnet, dass auf Höhe des Eingangs der Nut (3) am Umfang des Plättchens (1) mindestens ein Führungszapfen (5') für den am ersten Fortsatz (7) befestigten Draht vorhanden ist und/oder dass Vorsprünge (15, 15') auf der Oberseite der umgelegten Zunge (12, 13) vorgesehen sind, um den Draht zu führen, der an dem zweiten Fortsatz (10) befestigt ist.

8. Vorrichtung nach einem der beiden Ansprüche 5 oder 6, dadurch gekennzeichnet, dass die Zunge (12, 13) in der Nähe des Umfangs des Plättchens (1) mit einem Bereich (11) geringerer Dicke versehen ist, der ein Scharnier bildet.

9. Vorrichtung nach einem der Ansprüche 1 bis 8, dadurch gekennzeichnet, dass zwischen den beiden Fortsätzen (7, 10) der Umfang des Plättchens (1) mit mindestens einer Positionierwarze (16) versehen ist.

10. Vorrichtung nach einem der Ansprüche 1 bis 9, dadurch gekennzeichnet, dass jeder Fortsatz (7, 10) einen mit der die Nut aufweisenden Seite (2) des Plättchens (1) verbundenen konischen Fuss besitzt und mit einem zylindrischen Teil (9) endet.

11. Vorrichtung nach einem der Ansprüche 1 bis 10, dadurch gekennzeichnet, dass die Seitenwände der Windungen der spiralförmigen Nut (3) in Richtung auf das Zentrum (1') des Plättchens hin geneigt verlaufen.

12. Vorrichtung nach einem der Ansprüche 1 bis 10, dadurch gekennzeichnet, dass der Eingang der Windungen mindestens auf bestimmten Längenabschnitten derselben im Verhältnis zum Durchmesser des Heizdrahts verengt ist.

13. Verfahren zum Einbringen des Heizdrahtes in der spiralförmigen Nut (3) der Vorrichtung gemäss einem der Ansprüche 7 bis 12, dadurch gekennzeichnet, dass der von einer Abwickelspule (20) kommende Heizdraht (19') an dem besagten ersten Fortsatz (7) befestigt und um den benachbarten Zapfen (5') herumgelegt wird, dass ein Drehkreuz (21) mit mehreren Armen, die sich zwischen den zwei Fortsätzen erstrecken, in zentraler Ausrichtung auf dem Plättchen angeordnet wird, dass das Plättchen (1) unter dem Drehkreuz (21) bis zur vollständigen Beschickung der Spirale gedreht wird, dass die Zunge (12, 13) über das Plättchen (1) umgelegt wird und dass, nach dem Durchtrennen des von der Spule kommenden Drahts, das Ende desselben an dem zweiten Fortsatz (10) befestigt wird, wobei man den Draht über die oder zwischen den von der besagten Zunge getragenen Vorsprüngen (15, 15') verlaufen lässt.

14. Verfahren nach Anspruch 13, dadurch gekennzeichnet, dass nach Durchführen der verschiedenen Arbeitsgänge die Öffnungen der Nut (3) durch Anwendung eines erhitzten Werkzeuges (22,..., 22n) verformt werden.

15. Verwendung einer Vorrichtung gemäss einem der Ansprüche 1 bis 12, die vorzugsweise nach einem Verfahren gemäss einem der beiden Ansprüche 13 oder 14 hergestellt ist, um den Sattel (24) eines Rohrabzweigs an einer Rohrleitung oder einem Hauptrohr (23) aus thermoplastischem Kunststoff zu befestigen, dadurch gekennzeichnet, dass die Vorrichtung (1) in gerundeter oder gewölbter Form in die Fläche des Sattels, die dazu bestimmt ist, an die Rohrleitung oder das Hauptrohr (23) angelegt zu werden, vorzugsweise während des Vorgangs des Giessens des Sattels eingefügt und während des Erhitzens des Drahts in fester Anlage an der besagten Rohrleitung vermittelt an Befestigungslaschen (32, 33) des Sattels angreifender Halter oder durch gegenseitigen Eingriff zwischen den Laschen (32, 33) und einer Halbschelle gehalten wird, die Nuten in Form geneigter Halterampen (33, 44) aufweist oder mit der der Sattel durch elastische Verformung der Halbschelle und/oder des Sattels verklammert ist.

## Revendications

1. Dispositif en matière plastique, notamment en matière thermoplastique, pour réaliser une perforation dans un élément sous-jacent fait de la même matière plastique ou d'une matière plastique compatible avec la précédente, caractérisé par le fait qu'il est constitué par une plaquette (1) d'épaisseur relativement faible, dans une face (2) de laquelle est ménagée une gorge (3) en forme de spirale au centre de laquelle la plaquette est munie d'une ouverture (1'), ladite gorge en forme de spirale étant destinée à recevoir un fil de chauffage électrique (19') dont une extrémité est destinée à être accrochée à un premier appendice (7) porté par la plaquette, du côté de la face dans laquelle est ménagée ladite gorge, et dont l'autre est destinée à être accrochée à un second appendice (10), similaire au premier, situé à une certaine distance de ce dernier.

2. Dispositif selon la revendication 1, caractérisé par le fait que l'extrémité du fil de chauffage électrique (19'), destinée à être accrochée audit second appendice (10), passe sur la face de la plaquette (1) dans laquelle est ménagée la gorge en spirale (3).

3. Dispositif selon l'une et/ou l'autre des revendications 1 et 2, caractérisé par le fait que l'extrémité du fil de chauffage électrique (19'), destinée à être raccordée audit second appendice (10), rejoint ce dernier en passant entre deux rangées d'ergots (15, 15').

4. Dispositif selon l'une des revendications précédentes, caractérisé par le fait que l'extrémité du fil de chauffage électrique (19'), destinée à être accrochée audit second appendice (10), rejoint ce dernier en étant isolé de la plaquette (1) par une languette (12, 13).

5. Dispositif selon les revendications 3 et 4, caractérisé par le fait que les ergots (15, 15') sont portés par une languette (12, 13).

6. Dispositif selon l'une des revendications 4 ou 5, caractérisé par le fait que la plaquette (1) est sensiblement circulaire et possède deux oreilles (6, 6') portant les appendices (7, 10), la spire extérieure (4) de la gorge (3) en forme de spirale débouchant à la périphérie de la plaquette au niveau dudit premier appendice (7), alors que, au niveau de l'oreille portant le second appendice (10), la plaquette est pourvue de la languette (12, 13) susceptible d'être rabattue sur la face rainurée de la plaquette de manière qu'au moins l'une (13) de ses parties assume une position radiale et serve de support isolant pour l'extrémité du fil sortant de la spire intérieure (14) de la gorge et destiné à s'accrocher sur le second appendice (10).

7. Dispositif selon l'une des revendications 4 à 6, caractérisé par le fait que, au niveau de l'entrée périphérique de la gorge (3), la plaquette (1) est pourvue d'au moins un ergot de guidage (5') du fil qui s'accroche sur le premier appendice (7), et/ou des ergots (15, 15') sont prévus sur la face supérieure de la languettte rabattue (12, 13), pour guider le fil qui s'accroche sur le second appendice (10).

8. Dispositif selon l'une des revendications 5 ou 6, caractérisé par le fait que la languette (12, 13) est pourvue, près de la périphérie de la plaquette (1), d'une partie amincie (11) faisant charnière.

9. Dispositif selon l'une des revendications 1 à 8, caractérisé par le fait que, entre les deux appendices (7, 10), la périphérie de la plaquette (1) est pourvue d'au moins un téton de positionnement (16).

10. Dispositif selon l'une des revendications 1 à 9, caractérisé par le fait que chaque appendice (7, 10) présente une base conique (8) liée à la face rainurée (2) de la plaquette (1) et se termine par une partie cylindrique (9).

11. Dispositif selon l'une des revendications 1 à 10, caractérisé par le fait que les côtés latéraux des spires de la gorge (3) en forme de spirale sont inclinés en direction du centre de la plaquette (1').

12. Dispositif selon l'une des revendications 1 à 10, caractérisé par le fait que l'entrée des spires est étranglée par rapport au diamètre du fil de chauffage, au moins sur certaines longueurs de celles-ci.

13. Procédé pour la mise en place du fil de chauffage dans la gorge (3) en spirale du dispositif selon l'une des revendications 7 à 12, caractérisé par le fait que le fil de chauffage (19'), provenant d'une bobine débitrice (20), est accroché audit premier appendice (7) et est placé autour de l'ergot (5') voisin, qu'un croisillon (21) à plusieurs branches qui s'étendent entre les deux appendices est placé en position centrale sur la plaquette, que

Drahts, das Ende desselben an dem zweiten Fortsatz (10) befestigt wird, wobei man den Draht über die oder zwischen den von der besagten Zunge getragenen Vorsprüngen (15, 15') verlaufen lässt.

14. Verfahren nach Anspruch 13, dadurch gekennzeichnet, dass nach Durchführen der verschiedenen Arbeitsgänge die Öffnungen der Nut (3) durch Anwendung eines erhitzten Werkzeuges $(22,..., 22^n)$ verformt werden.

15. Verwendung einer Vorrichtung gemäss einem der Ansprüche 1 bis 12, die vorzugsweise nach einem Verfahren gemäss einem der beiden Ansprüche 13 oder 14 hergestellt ist, um den Sattel (24) eines Rohrabzweigs an einer Rohrleitung oder einem Hauptrohr (23) aus thermoplastischem Kunststoff zu befestigen, dadurch gekennzeichnet, dass die Vorrichtung (1) in gerundeter oder gewölbter Form in die Fläche des Sattels, die dazu bestimmt ist, an die Rohrleitung oder das Hauptrohr (23) angelegt zu werden, vorzugsweise während des Vorgangs des Giessens des Sattels eingefügt und während des Erhitzens des Drahts in fester Anlage an der besagten Rohrleitung vermittelt an Befestigungslaschen (32, 33) des Sattels angreifender Halter oder durch gegenseitigen Eingriff zwischen den Laschen (32, 33) und einer Halbschelle gehalten wird, die Nuten in Form geneigter Halterampen (33, 44) aufweist oder mit der der Sattel durch elastische Verformung der Halbschelle und/oder des Sattels verklammert ist.

FIG.1

FIG.2

FIG.3

FIG.4

FIG.5

FIG.6

FIG.7

FIG.8

FIG.9

FIG.10

FIG.13

FIG.12

FIG.11